(19) Europäisches Patentamt
European Patent Office
Office européen des brevets

(11) EP 1 237 959 B1

(12) EUROPEAN PATENT SPECIFICATION

(45) Date of publication and mention of the grant of the patent:
**12.09.2007 Bulletin 2007/37**

(21) Application number: **00972348.7**

(22) Date of filing: **23.10.2000**

(51) Int Cl.:
***C08F 30/08*** *(2006.01)* ***G02B 1/04*** *(2006.01)*

(86) International application number:
**PCT/US2000/029245**

(87) International publication number:
**WO 2001/030867 (03.05.2001 Gazette 2001/18)**

(54) **METHOD OF MAKING AN OPTICAL QUALITY POLYMER**

VERFAHREN ZUR HERSTELLUNG VON OPTISCHEN QUALITÄTSPOLYMEREN

PROCEDE DE FABRICATION D'UN POLYMERE DE QUALITE OPTIQUE

(84) Designated Contracting States:
**DE FR GB IE IT**

(30) Priority: **25.10.1999 US 426675**

(43) Date of publication of application:
**11.09.2002 Bulletin 2002/37**

(73) Proprietor: **Johnson & Johnson Vision Care, Inc.**
**Jacksonville, FL 32256 (US)**

(72) Inventors:
- **ALLI, Azaam**
  **Jacksonville, FL 32256 (US)**
- **ENNS, John, B.**
  **Jacksonville, FL 32257 (US)**
- **FORD, James, D.**
  **Orange Park, FL 32073 (US)**
- **TURNER, David, C.**
  **Jacksonville, FL 32223 (US)**
- **LOVE, Robert N.**
  **Utah 84319 (US)**

(74) Representative: **Mercer, Christopher Paul et al**
**Carpmaels & Ransford**
**43, Bloomsbury Square**
**London WC1A 2RA (GB)**

(56) References cited:
**DE-A- 19 630 100** **US-A- 4 330 383**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

## Background of the Invention

The invention relates to the manufacture of an optical quality polymer.

Hydrogels are a desirable class of materials for many biomedical applications. They are hydrated, cross-linked polymeric systems that contain water in an equilibrium state. US Patent 5,936,052 proposes a method of producing hydrogels that are statistically random copolymers and which are suitable for use in contact lens applications. According to the ’052 patent, statistical polymers are polymers without significant block domains. The process used to produce them is said to comply with the Lewis-Mayo equation that describes the ratio of monomer building blocks in terms of monomer concentration and speed constants for the reactions involved. In the method proposed in the ’052 patent, the differential ratio of monomer concentration with respect to time is zero and the differential ratio of one monomer concentration with respect to any other is a constant. Aside from these constraints, no other process parameters appear to be controlled. The examples indicate that final polymerization/cross linking occurs at room temperature since the monomers from which they were prepared were cooled following synthesis.

Silicone hydrogels have high oxygen permeability making them particularly desirable for use in contact lenses. They are usually prepared by polymerizing a mixture containing at least one silicone-containing monomer and at least one hydrophilic monomer. Either the silicone-containing monomer or the hydrophilic monomer may function as a crosslinking agent or a separate crosslinker may be employed. Crosslinking agents are monomers having multiple polymerizable moieties. The term "monomer" when used in this sense refers to a component of the monomer mix used in forming the cured polymer system. The crosslinking agent can be monomeric, dimeric, trimeric, or polymeric molecules and still be considered a monomer with respect to the silicone hydrogel ultimately produced from it. The polymerizable functionalities generally bond to more than one polymer chain creating a network or network-like polymeric structure. There are numerous silicone-containing monomeric units commonly used in the formation of silicone hydrogels. U.S. Pat Nos. 4,136,250; 4,153,641; 4.740,533; 5,034,461; 5,070,215; 5,260,000; 5,310;779; and 5,358,995 provide some useful examples.

Silicome-containing monomers may be copolymerized with a wide variety of hydrophilic monomers to produce a variety of silicone hydrogel products. Hydrophilic monomers that have previously been found useful for making silicone hydrogels include: unsaturated carboxylic acids, such as methacrylic and acrylic acids; acrylic substituted alcohols, such as 2-hydroxyethybnetbacrylate and 2-hydroxyethylacrylate; vinyl lactams, such as N-vinyl pyrrolidone; and acrylamides, such as methacrylamide and N,N-dimethylacrylamide. Still further examples are the hydrophilic vinyl carbonate or vinyl carbamate monomers disclosed in U.S. Pat. Nos. 5,070,215, and the hydrophilic oxazolone monomers disclosed in U.S. Pat. No. 4,910,277.

US 4,330,383 relates to a method of improving dimensional stability of polymeric materials. Example 1 of US 4,330,383 discloses combining monomers with a free radical polymerization initiator and heating the mixture and this step is the polymerization/curing step itself.

DE 19630100 A relates to the combination of precondensates with other monomers. If the polymerisation in DE 19630100 A is to be carried out as a photochemical polymerisation, photoinitiators are added prior to polymerisation taking place.

Unfortunately, polymerizing monomers with very different bulk properties is not trouble free. When making silicone hydrogels from a combination of hydrophobic and hydrophilic monomers, for example, the resulting polymer chains tend to form domains in which one or the other monomer predominates. Contact lenses made from these materials may exhibit grit. Grit is a physical defect within the polymer matrix characterized by inhomogeneities ranging in size from 0.1 to 100 $\mu$m in the polymer matrix that appear to be bound to the matrix. Grit tends to scatter light resulting in poor light transmission through the lens. Even in the absence of grit, optical clarity can be less than desirable.

Attempts at remedying these effects have been largely restricted to improving miscibility of the monomers and additives from which the polymer is made. Differences in the hydrophilic character of the monomers are manifested in the polymerization process. Thus, a reasonable means for addressing domain formation or phase separation in the resulting polymer is trough the selection of a diluent in which all of the Monomeric components are reasonably soluble. This approach has improved some polymerization processes but still leaves much to be desired. Finding a diluent in which hydrophilic and hydrophobic components are both fairly miscible is not easily done and even then the resulting polymer often contains a high degree of blocky domains.

A new method for producing an optical quality polymer with a reduced propensity for forming grit and improved clarity is still desirable. Furthermore, it would be beneficial if such polymers could be made with improvements in wettability and clarity without compromising other bulk and optical properties.

## Summary of the Invention

The invention is a method of making improved optical quality polymers by normalizing the polymerization rates of the components of the monomer mix used. The polymers produced by this process minimize the formation of separate domains, decrease the level of grit and show improved clarity in contact lenses made from the polymers.

More specifically, this invention provides the methods described in the following numbered clauses.

1. A method of making a silicone hydrogel comprising the steps of heating a monomer mix to a temperature of 55 to 75°C prior to curing said monomer mix with UV or visible radiation and a corresponding photoinitiatior system, wherein said monomer mix consists of components selected from the group consisting of siloxanes; silanes; amides; additive monomers; acrylic/methacrylic acid and derivatives; polyvinyl, including di- or tri-vinyl, units; di- or tri(meth) acrylates of diethyleneglycol, triethyleneglycol, butyleneglycol and hexane-1,6-diol; divinylbenzene; polydimethyl siloxanes; hydroxyethyl acrylate/methacrylate derivatives; mono-alkyl terminated polydimethylsiloxanes; a macromer comprising the reaction product of 2-hydroxyethyl methacrylate, methyl methacrylate, methacryloxypropyltris (trimethylsiloxy)silane, mono-methacryloxypropyl terminated mono-butyl terminated polydimethylsiloxane and 3-isopropenyl-α,α-dimethylbenzyl isocyanate; methacryloxypropyl tris(trimethyl siloxy) silane; N,N-dimethyl acrylamide; and triethyleneglycoldimethacrylate.

2. The method of numbered clause 1 wherein said silicone hydrogel is made from a siloxane; silane; amide or additive monomer or a mixture thereof.

3. The method of numbered clause 2 wherein said silicone hydrogel is made from a polydimethyl siloxane, methacryloxypropyltris(trimethylsiloxy)silane, a dimethyl amide, and acrylate derivative and a methacrylate derivative.

4. The method of numbered clause 3 wherein said polydimethyl siloxane comprises monomethacryloxy polydimethyl siloxane.

5. The method of any one of numbered clauses 1 to 4, wherein said hydrogel comprises a macromer made by combining 2-hydroxyethyl methacrylate, methyl methacrylate, methacryloxypropyltris(trimethylsiloxy)silane, mono-methacryloxypropyl terminated mono-butyl terminated polydimethylsiloxane and 3-isopropenyl-α,α-dimethylbenzyl isocyanate.

6. The method of any one of numbered clauses 1 to 5, comprising:

   a) formulating a monomer mix comprising polydimethylsiloxane; a macromer made by combining hydrophobic monomers and hydrophilic monomers; silanes; amides; methacrylate derivatives; and photoinitiators;
   b) normalizing the reaction rates of the monomer mix components; and
   c) curing said monomer mix with UV or visible radiation.

7. The method of numbered clause 6 wherein normalizing the reaction rates comprises heating to a temperature of 55 to 75°C.

8. The method of numbered clause 6 or 7 wherein the monomer mix further comprises monomethacryloxy polydimethylsiloxane; a macromer made by combining 2-hydroxyethyl methacrylate, methyl methacrylate, methacryloxypropyltris(trimethylsiloxy) silane, monomethacryloxypropyl terminated mono-butyl terminated polydimethylsiloxane, and 3-isopropenyl-α,α-dimethylbenzyl isocyanate; methacryloxypropyl tris(trimethyl siloxy) silane; triethyleneglycoldimethacrylate; hydroxyethyl methacrylic acid; and photoinitiators.

In yet another aspect of the invention, contact lenses are made from silicone hydrogels made by normalizing the polymerization rates of the components of the monomer mix used.

## Detailed Description

In the process of this invention monomers, crosslinking agents, and additives suitable for making optical quality polymers are mixed to form a monomer mix. The mix is brought under conditions in which their reaction rates of the monomers and crosslinking agents are normalized. The monomer mix is then cured to produce the optical quality polymer.

An "optical quality" polymer is a polymer suitable for use as an intraoccular lens, contact lens, or other similar device through which vision is corrected or eye physiology is cosmetically enhanced (e.g., iris color) without impeding

vision.

To "normalize" polymerization rates means to render homogeneous the rate at which monomeric components are polymerized. In the embodiment of the invention in which the optical quality polymers comprise silicone hydrogels, polymerization rates are normalized when there is a difference of no more than 4 times the reaction rate (i.e., incorporation rate) of the monomers responsible for the polymer backbone and the crosslinking agents which crosslink them. That is, each such monomer unit or cross linking agent reacts no more slowly than 4 times that of any other such monomer or crosslinking agent. It is helpful, but not necessary, that all components of the monomer mix (e.g., UV blockers, processing aids) from which the optical quality polymer is formed meet this criteria.

In functional terms, optical quality polymers made according to a process having sufficiently normalized polymerization rates exhibit a reduction in grit count of at least one third relative to those made by processes in which the polymerization rate is not normalized. Further, the optical quality polymers of this invention are clear (i.e., absent of haze attributable to light scattering). That is, aside from tinting or coloring (e.g., with a pigment or other colorant), the polymers scatter less than 4.4% light as measured by the off-axis light scattered by the lens (at 45 degrees relative to the source) using a white light source and a CCD camera. Preferably, they scatter less than 4% and most preferably they scatter less than 3.8% of light according to the same method. Without being bound to theory, it is believed that the clarity of the lens is a result of a reduction or elimination in phase separation brought about by normalized polymerization rates.

It is preferred that there is a difference of no more than 3.75 times the reaction rate (i.e., incorporation rate) of the monomers responsible for the polymer backbone and the crosslinking agents and a reduction in grit count of at least 50% relative to lenses made from processes which not normalized. It is most preferred that there is a difference of no more than 3.3 times the reaction rates of such materials and a reduction in grit count of at least 80%.

The components of the monomer mix whose reaction/incorporation rates are normalized are set out above and may be those which form the polymer backbone and those which crosslink it. These include, for example, siloxanes and acrylic/methacrylic acid and derivatives, polyvinyl, typically di- or tri-vinyl monomers, such as di- or tri(meth)acrylates of diethyleneglycol, triethyleneglycol, butyleneglycol and hexane-1,6- diol; divinylbenzene. In the preferred embodiment, the siloxane component is a polydimethyl siloxane and the hydrophilic monomer is a hydroxyethyl methacrylate or acrylate derivative. In the most preferred embodiment, the monomers comprise mono-alkyl terminated polydimethylsiloxanes ("mPDMS") such as monomethacryloxy propyl terminated polydimethyl siloxane and a macromer comprising the reaction product of 2-hydroxyethyl methacrylate, methyl methacrylate, methacryloxypropyltris(trimethylsiloxy)silane, mono-methacryloxypropyl terminated mono-butyl terminated polydimethylsiloxane, and 3-isopropenyl-α,α -dimethylbenzyl isocyanate. Additionally preferred monomers whose reaction rates are normalized include, for example, methacryloxypropyl tris(trimethyl siloxy) silane, "TRIS"; N,N-dimethyl acrylamide, "DMA"; triethyleneglycoldimethacrylate, "TEGDMA". Other monomers and crosslinking agents known in the art for making silicone hydrogels can also be used, as set out in the attached claims.

The employment of mPDMS is noteworthy as it is thought to be responsible for imbuing the resulting hydrogel with improved mechanical properties such as reduced elastic modulus and tan δ (loss modulus of the material divided by its elastic modulus or G"/G') without compromising monomer compatibility during the polymerization process. Unlike many of the siloxanes predominantly used at present, mPDMS does not have significant polar functionality and is of relatively high molecular weight. Measures to improve its incorporation are thus particularly welcome. The structure of mPDMS can be described as follows:

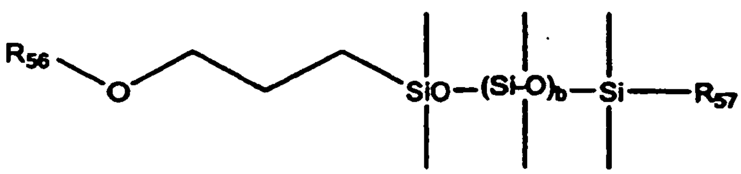

where b = 0 to 100, and $R_{57}$ is any $C_{1-10}$ aliphatic or aromatic group which may include hetero atoms; provided that $R_{57}$ is not functionalized at the point at which it is bonded to Si. $C_{3-8}$ alkyl groups are preferred with butyl groups, particularly sec-butyl groups, being most preferred. $R_{56}$ is any single polymerizable vinyl group. Preferably it is a methacryl moiety but it can also be an acryl or styrenic moiety or other similar moiety.

In this invention, the aforementioned monomers and crosslinkers are heated prior to their reaction. Specifically, they are heated to at least 55°C, still more preferably at least about 65°C, and most preferably at least about 70°C but no more than 75°C. In any event, heating is conducted at a temperature that will normalize reaction rates to the extent described above. The method of heating the monomers or crosslinking agents is not critical provided that it does not decompose or significantly alter the chemical structure of them or cause the monomer mix to gel before exposure to

radiation. Cure within the mold may then also be conducted at elevated temperatures within these same temperature ranges. Some examples of heating methods include placing monomer mix components in proximity to electrical heating elements, exposing the monomer mix to microwave radiation followed by UV radiation (to affect cure), and directing IR radiation to the monomer mix. Directing radiation to the monomer mix can be done directly or indirectly through the use of reflectors.

While normalization of the reaction rates is a kinetic result, it can be achieved by proper control of variables other than an increase in temperature. For example, control of UV intensity/dose, initiator concentration, and UV cure profile can be used to control reaction rates.

Curing of the optical quality polymer is conducted by radiation initiated free radical polymerizations. Within the context of this invention, the curings are photoinitiated using UV or visible radiation and a corresponding photoinitiator system. Examples of such photoinitiators are benzoin methyl ether, 1-hydroxycyclohexyl phenyl ketone, Irgacure 1850 brand photoinitiator (CAS Number 145052-34-2), 1-hydroxy cyclohexyl phenyl ketone (Irgacure 184); 2-benzyl-2-n-dimethylammo-1-(4-morpholinophenyl)-i-butanone (Irgacure Tm 369); 1-hydroxycyclohexyl phenyl ketone (50% by weight) plus benzophenone(Irgacure Tm 500); bis(2,6- dimethoxy benzoyl)-2,4,4 trimethylpentyl phosphineoxide (DMBAPO) ; 4-(2- hydroxyethoxy) phenyl-(2-hydroxy propyl)ketone (Irgacure TM 2959); 2,4,6-Trimethyl benzoyl diphenyl phosphineoxide (TPO) (50% by weight) plus 2-hydroxy-2-methyl-1-phenyl-propan-1-one (HMPP) (50% by weight) (Darocur Tm 4265); 2,2-dimethoxy-2- phenylacetophenone (BDK) (Irgacure Tm 651) ; bis (n1-2,4-cyclopentadien-1-yl), bis (2,6-difluoro-3-(1H-pyrrol-1-yl)phenyl) Titanium (CGI-784) ; 2-methyl-1-(4-(methylthio)phenyl)-2-morpholino propan-1-one (MMMP) (Irgacure TM 907) ; 2-hydroxy-2-methyl-1-phenyl-propan-1-one (HMPP) (Darocur TM 1173); or mixtures thereof DMBAPO and Irgacure 1850 are preferred photoinitiators with DMBAPO being most preferred.

Cure is also suitably carried out in the presence of a diluent. Suituable diluents include alkanols, N,N- dimethylformamide acetamide, acetonitrile, N,N-dimethylacetamide, heptane, dimethyl sulfoxide, acetone, tert-butyl acetate, ethyl acetate, isopropyl acetate, and N-methyl-2-pyrrolidone, and dimethyl-3-octanol. Low molecular weight ($C_{5-12}$) alkanols are preferred.

The optical quality polymers of this invention offer numerous advantages. They do not experience phase separation during cure resulting in a reduction of grit. Further, internal stresses are reduced so that blistering does not result during subsequent autoclaving of the lenses formed from the polymer. Reducing grit greatly reduced the degree of unwanted light scattering in the lenses so produced. The greatly reduced presence of domains also improves wettability of the lens.

The invention is further described in the following nonlimiting examples.

## Examples

"Macromer", as the term is used in the examples, refers to a prepolymer in which one mole is made from an average of 19.1 moles of 2-hydroxyethyl methacrylate, 2.8 moles of methyl methacrylate, 7.9 moles of methacryloxypropyltris(trimethylsiloxy)silane, and 3.3 moles of mono-methacryloxypropyl terminated mono-butyl terminated polydimethylsiloxane. The macromer is completed by reacting the aforementioned material with 2.0 moles per mole of 3-isopropenyl-$\alpha$,$\alpha$-dimethylbenzyl isocyanate using dibutyltin dilaurate as a catalyst.

## Example 1: Hydrogel Formation

A hydrogel was made from the following monomer mix (all amounts are calculated as weight percent of the total weight of the combination): macromer (~18%); an $Si_{7-9}$ monomethacryloxy terminated polydimethyl siloxane (~28%); methacryloxypropyl tris(trimethyl siloxy) silane, "TRIS" (~14%); dimethyl amide, "DMA" (~26%); hydroxy ethyl methacrylic acid, "HEMA" (~5%); triethyleneglycoldimethacrylate, "TEGDMA" (~1%), polyvinylpyrrolidone, "PVP" (~5%); with the balance comprising minor amounts of additives and photoinitiators. The polymerization was conducted in the presence of 20%wt dimethyl-3-octanol diluent.

The hydrogels were formed by adding about 9 drops of the monomer mix on a polypropylene disc fixture in a Haake Rheostress RS1000 rheometer with circulating bath temperature control. The monomer mix was degassed under roughing vacuum (<50 mm Hg) for between 5 and 30 minutes. Cure was conducted in the rheometer over the course of 1200 sec at varying temperatures shown below. Polymerization occurred under a nitrogen purge and was photoinitiated with 5 mW $cm^2$ of UV light generated with an Andover Corp. 42OPS10-25 AM39565-02 light filter. After polymerization, each disc was removed from the disc fixture and leached in 4 aliquots of 150mL 2-propanol over a 24 hour period prior to being re-equilibrated with deionized water. Each disc had a thickness of 500 $\mu$m. The discs were analyzed for grit formation using a 100X visible light microscope. Grit, for this purpose, is considered any speck on the lens or anywhere throughout its bulk which is visible under magnification of 40X or more (i.e., a defect of about 100 $\mu$m or more). Results are show in Table 1:

**Table 1:**

| Cure Temperature (°C) | Grit Count |
|---|---|
| 20* | 68 |
| 30* | 40 |
| 45* | 38 |
| 55 | 21 |
| 65 | 12 |
| *=For comparison | |

This example shows that grit formation is substantially reduced when cure temperature is elevated.

**Example 2: Cure Kinetics**

Hydrogels were made according to Example 1 except that cure was conducted at temperatures of 25 °C, 45°C, and 65°C. Rate constants were determined during the course of cure at each of these temperatures by determining the concentration of monomer species present over the course of time. The average rates for each of the components are shown in Table 3. First order reaction kinetics were used in the calculation.

**Table 2: Reaction Rate Constants** ($5^{-1}$)

| Temp (C) | mPDMS | Macromer | TEGDMA | TRIS | DMA | HEMA |
|---|---|---|---|---|---|---|
| 25* | 0.0040 | 0.0175 | 0.0145 | 0.0053 | 0.0044 | 0.0122 |
| 45* | 0.0035 | 0.0142 | 0.0140 | 0.0068 | 0.0051 | 0.01412 |
| 65 | 0.0072 | 0.0235 | 0.0188 | 0.0120 | 0.0071 | 0.0177 |
| *= For comparison | | | | | | |

This example shows that mPDMS and DMA react much more slowly than do the crosslinkers (TEGDMA and Macromer). However, the cure rate of these components together with TRIS are significantly elevated with an increase in temperature. Thus, increasing cure temperature normalizes the rate of cure of these components relative to those of the components relatively unaffected by an increase in temperature.

**Example 3: Monomer Conversion**

Hydrogels were made according to Example 1. The time taken to attain various levels of monomer conversion (mFDMS, TRIS, DMA) was determined by measuring monomer concentrations during cure. Results are summarized in Tables 3a-c in which the decrease in the time (seconds) it takes to convert a monomer is shown for conversions rates of 40 to 80% as the monomer temperature was increased from 25 to 65°C.

**Table 3a: Temperature effect on rate of % conversion of mPDMS**

| % Conversion | 25°C* | 45°C* | 65°C |
|---|---|---|---|
| mPDMS | Time (sec) | Time (sec) | Time (sec) |
| 40 | 149 | 112 | 86 |
| 55 | 233 | 152 | 119 |
| 65 | 309 | 178 | 143 |
| 80 | 459 | 279 | 179 |
| * = For comparison | | | |

**Table 3b: Temperature effect on rate of % conversion of Tris**

| **% Conversion** | **25°C *** | **45°C*** | **65°C** |
|---|---|---|---|
| Tris | Time (sec) | Time (sec) | Time (sec) |
| 40 | 111 | 80 | 36 |
| 55 | 177 | 123 | 48 |
| 65 | 250 | 155 | 90 |
| 80 | 396 | 234 | 162 |

**Table 3c: Temperature effect on rate of % conversion of DMA**

| **% Conversion** | **25°C*** | **45°C*** | **65°C** |
|---|---|---|---|
| **DMA** | **Time (sec)** | **Time (sec)** | **Time (sec)** |
| 40 | 139 | 94 | 64 |
| 55 | 254 | 150 | 100 |
| 65 | 356 | 193 | 132 |
| 80 | 533 | 295 | 181 |
| *=For comparison | | | |

These examples show that incorporation of certain monomers and crosslinking agents are greatly increased with the application of heat. In general, the rate of most chemical reactions increases with increased temperature, however the disproportional increase in rates of various components relative to others seen here could not be expected in a polymerization reaction, particularly a photoinitiated polymerization.

**Example 4: Clarity**

The monomer mix of Example I was degassed under reduced pressure (40 mm Hg), with stirring for 15 minutes and then left stationary for an additional fifteen minutes at 45°C. It was subsequently transferred to contact lens molds under a nitrogen atmosphere. The filled molds were preheated for 4 minutes and then exposed to visible light (wavelength: 380-460 mn with a peak maximum at 425 mm dose : approx. 2.5 $J/cm^2$) for 8 minutes. Lens lot A was curred at 45°C. Lens lot B was cured at 70°C. After polymerization, the molds were separated and the lenses were released from the molds in a 60:40 (v/v) solution of isopropanol and DI water, leached in 5 aliquots of isopropanol over a period of not less than 10 hours, then equilibrated in a step-wise progression to physiological saline over not less than 2 hours.

Lens haziness was determined by measuring the off-axis light scattered by the lens (at 45 degrees relative to the source) using a white light source and a CCD camera. The lamp was a Newport tungsten-halogen lamp with a projector lens and produced a photographically uniform color temperature spot at 45 degrees to the sample. The sample was placed with the posterior curve facing the CCD camera and the lamp at 45 degrees in front of the sample from the perpendicular to the anterior face of the lens.

Normalization of the luminance of the light scattering device was conducted as follows. An opal glass diffuser (Melles Griot 13 FSD 003, 25mm diameter) was positioned in place of the sample to serve as a reference standard for light scatter. The lamp used to illuminate the sample was positioned such that an 8-bit CCD camera (an Optronics TEC 470) set at 1/60th of a second (fixed), gamma = 1.0 and the lens (Navitar 7000) with the iris set in the mid-position click stop between fully open and fully closed, yielded a brightness value for the full field of view of 254 with a standard deviation of less than 1 intensity unit over then entire field. This represents a maximum variation of 1 part in 256 or approximately 0.4%.

When the opal glass was replaced by a quartz or glass cuvette filled with saline (packing solution) and stoppered with a silicone stopper, the scatter of this solution was near zero. Adjustments were made for scatter resulting from the presence of particles by subtracting the sample blank values from the sample values to normalize the blank to a reading of zero.

The calculation of relative scatter was accomplished as follows. The 0 luminance level was discarded, leaving 255 real luminance levels possible. The blank values (saline without a lens) were then obtained as well as the sample values. This was done by capturing an image (using the aforementioned settings) and then processing it with "OPITIMAS"

image analysis software commercially available from Media Cybernetics, Inc. Area morphology algorithms employed by the software were used to conduct the processing. The extreme edge or inclusion of portions of the image not associated with the lens were avoided in using the Region of Interest (ROI) tool. A mean gray level was obtained for the blank by comparison with the ROI copied to the image of the lens. 8-bit gray scale images were used for this purpose.

Relative scatter was then determined according to the following equation:

$$\{[(\text{Sample Mean Gray Level}) - (\text{Blank Mean Gray Level})] / 255\} \times 100.$$

The values obtained from this equation were then reported as a percent, e.g. 6.8% relative scatter.

Comparison of the two lenses described above indicates a five-fold reduction in off-axis light scattering of Lens lot B relative to Lens lot A. For comparison, light scattering for two commercially available contact lenses was also determined. Results are shown in Table 4.

**Table 4**

| Lens | Light Scattering (%) |
|---|---|
| Balafilcon* | 4.4 |
| Lotrafilcon* | 5.3 |
| Lens lot A* | 20.4 |
| Lew lot B | 3.7 |
| *For comparison. | |

This example shows the improvement in optical clarity of lenses made according to the invention.

**Example 5: Surface Wettability**

Lenses were made according to Example 5 except that different lots were cured at the following temperatures: 45°C, 55°C, 65°C, 70°C, and 75°C respectively. Dynamic contact angles were measured as follows. Five samples of each lens were prepared by cutting out a center strip approximately 5mm in width and equilibrating in borate buffered saline packing solution (>05 hr). Dynamic contact angles of the strips were determined using a Calm DCA-315 microbalance commercially available from Calm Instruments of Madison, WL Each sample was cycled four times in borate buffered packing solution and the cycles were averaged to obtain advancing and receding contact lenses for each lens. The contact angles of the five lenses were then averaged to obtain mean contact angles for the set. Results are shown in Table 5.

**Table 5**

| Lens | A | B | C | D | E |
|---|---|---|---|---|---|
| **Cure Temp (°C)** | 45* | 55 | 65 | 70 | 75 |
| **Contact Angle (°, Advancing)** | 83 | 76 | 66 | 58 | 54 |
| *=For comparison | | | | | |

this example demonstrates that the surface wettability of the lens improves with increasing temperature of the cure. Without being bound to theory, this is consistent with fewer "blocky" silicone domains on the surface of the lens - that is, as the lens polymer becomes more isotropic the hydrophobic silicone is dispersed and screened out by the more hydrophilic components of the lens polymer.

## Claims

1. A method of making a silicone hydrogel comprising the steps of heating a monomer mix to a temperature of 55 to 75°C prior to curing said monomer mix with UV or visible radiation and a corresponding photoinitiatior system, wherein said monomer mix consists of components selected from the group consisting of siloxanes; silanes; amides;

additive monomers; acrylic/methacrylic acid and derivatives; polyvinyl, including di- or tri-vinyl, units; di- or tri(meth) acrylates of diethyleneglycol, triethyleneglyrol, butyleneglycol and hexane-1,6-diol; divinylbenzene; polydimethyl siloxanes; hydroxyethyl acrylate/methacrylate derivatives; mono-alkyl terminated polydimethylsiloxanes; a macromer comprising the reaction product of 2-hydroxyethyl methacrylate, methyl methacrylate, methacryloxypropyltris (trimethylsiloxy)silane, mono-methacryloxypropyl terminated mono-butyl terminated polydimethylsiloxane and 3-isopropenyl-$\alpha$,$\alpha$-dimethylbenzyl isocyanate ; methacryloxypropyl tris(trimethyl siloxy) silane; N,N-dimethyl acrylamide, and triethyleneglycoldimethacrylate.

**2.** The method of claim 1 wherein said silicone hydrogel is made from a siloxane; silane; amide or additive monomer or a mixture thereof.

**3.** The method of claim 2 wherein said silicone hydrogel is made from a polydimethyl siloxane, methacryloxypropyltris (trimethylsiloxy)silane, a dimethyl amide, and acrylate derivative and a methacrylate derivative.

**4.** The method of claim 3 wherein said polydimethyl siloxane comprises monomethacryloxy polydimethyl siloxane.

**5.** The method of any one of claims 1 to 4, wherein said hydrogel comprises a macromer made by combining 2-hydroxyethyl methacrylate, methyl methacrylate, methacryloxypropyltris(trimethylsiloxy)silane, mono-methacryloxypropyl terminated mono-butyl terminated polydimethylsiloxane and 3-isopropenyl-$\alpha$,$\alpha$-dimethylbenzyl isocyanate.

**6.** The method of any one of claims 1 to 5, comprising:

a) formulating a monomer mix comprising polydimethylsiloxane; a macromer made by combining hydrophobic monomers and hydrophilic monomers; silanes; amides; methacrylate derivatives; and photoinitiators ;
b) normalizing the reaction rates of the monomer mix components; and
c) curing said monomer mix with UV or visible radiation.

**7.** The method of claim 6 wherein normalizing the reaction rates comprises heating to a temperature of 55 to 75°C.

**8.** The method of claim 6 or 7 wherein the monomer mix further comprises monomethacryloxy polydimethylsiloxane, a macromer made by combining 2-hydroxyethyl methacrylate, methyl methacrylate, methacryloxypropyltris(trimethylsiloxy) silane, monomethacryloxypropyl terminated mono-butyl terminated polydimethylsiloxane, and 3-isopropenyl-$\alpha$,$\alpha$-dimethylbenzyl isocyanate; methacryloxypropyl tris(trimethyl siloxy) silane; triethyleneglycoldimethacrylate ; hydroxyethyl methacrylic acid; and photoinitiators.

**Patentansprüche**

**1.** Verfahren zur Herstellung eines Silikonhydrogels umfassend die Schritte eines Erwärmens einer Monomermischung auf eine Temperatur von 55 bis 75°C vor einem Härten der Monomermischung mit UV- oder sichtbarer Strahlung und einem korrespondierenden Fotoinitiatorsystem, wobei die Monomermischung aus Komponenten besteht, die ausgewählt sind aus der Gruppe bestehend aus Siloxanen; Silanen; Amiden; Additivmonomeren; Acryl-/Methacrylsäure und Derviaten; Polyvinyl, einschließend Di- oder Trivinyleinheiten; Di- oder Tri(meth)acrylaten von Diethylenglykol, Triethylenglykol, Butylenglykol und Hexan-1,6-diol; Divinylbenzol; Polydimethylsiloxanen; Hydroxyethylacrylat/-methacrylat-Derivaten; Monoalkylterminierten Polydimethylsiloxanen; einem Makromer umfassend das Reaktionsprodukt aus 2-Hydroxyethylmethacrylat, Methylmethacrylat, Methacryloxypropyltris(trimethylsiloxy)silan, mono-methacryloxypropylterminiertem, mono-butyl-terminiertem Polydimethylsiloxan und 3-Isopropenyl-$\alpha$,$\alpha$-dimethylbenzylisocyanat; Methacryloxypropyltris(trimethylsiloxy)silan; N,N-Dimethylacrylamid; und Triethylenglykoldimethacrylat.

**2.** Verfahren nach Anspruch 1, wobei das Silikonhydrogel hergestellt wird aus einem Siloxan; Silan; Amid oder Additivmonomer oder einer Mischung derselben.

**3.** Verfahren nach Anspruch 2, wobei das Silikonhydrogel hergestellt wird aus einem Polydimethylsiloxan, Methacryloxypropyltris(trimethylsiloxy)silan, einem Dimethylamid und Acrylatderivat und einem Methacrylatderivat.

**4.** Verfahren nach Anspruch 3, wobei das Polydimethylsiloxan Monomethacryloxypolydimethylsiloxan umfasst.

5. Verfahren nach einem der Ansprüche 1 bis 4, wobei das Hydrogel ein Makromer umfasst, das hergestellt wird durch Kombinieren von 2-Hydroxyethylmethacrylat, Methylmethacrylat, Methacryloxypropyltris(trimethylsiloxy)silan, mono-methacryloxypropyl-terminiertem, mono-butyl-terminiertem Polydimethylsiloxan und 3-Isopropenyl-$\alpha$,$\alpha$-dimethylbenzylisocyanat.

6. Verfahren nach einem der Ansprüche 1 bis 5, welches umfasst:

   (a) Formulieren einer Monomermischung umfassend Polydimethylsiloxan; ein Makromer hergestellt durch Kombinieren von hydrophoben Monomeren und hydrophilen Monomeren; Silanen; Amiden; Methacrylatderivaten; und Fotoinitiatoren;
   (b) Vereinheitlichen der Reaktionsgeschwindigkeit der Monomermischungskomponenten; und
   (c) Härten der Monomermischung mit UV- oder sichtbarer Strahlung.

7. Verfahren nach Anspruch 6, wobei das Vereinheitlichen der Reaktionsgeschwindigkeiten ein Erwärmen auf eine Temperatur von 55 bis 75°C umfasst.

8. Verfahren nach Anspruch 6 oder 7, wobei die Monomermischung ferner Monomethacryloxypolydimethylsiloxan; ein Makromer hergestellt durch Kombinieren von 2-Hydroxyethylmethacrylat, Methylmethacrylat, Methacryloxypropyltris(trimethylsiloxy)silan, monomethacryloxypropyl-terminiertem, mono-butyl-terminiertem Polydimethylsiloxan und 3-Isopropenyl-$\alpha$,$\alpha$-dimethylbenzylisocyanat; Methacryloxypropyltris(trimethylsiloxy)silan; Triethylenglykoldimethacrylat; Hydroxyethylmethacrylsäure; und Fotoinitiatoren umfasst.

## Revendications

1. Procédé de fabrication d'un hydrogel de silicone, comprenant les étapes consistant à chauffer un mélange de monomères à une température de 55°C à 75°C avant de durcir ledit mélange de monomères avec un rayonnement UV ou visible et un système de photoamorceurs correspondant, dans lequel ledit mélange de monomères consiste en des composants choisis dans le groupe constitué par les siloxanes ; les silanes ; les amides ; les additifs monomères ; l'acide acrylique/méthacrylique et leurs dérivés ; les polyvinyles, comprenant les motifs di- ou trivinyle ; les di - ou tri-(méth)acrylates de diéthylèneglycol, de triéthylèneglycol, de butylèneglycol et d'hexane-1,6-diol ; le divinylbenzène ; les polydiméthylsiloxanes ; les dérivés de l'acrylate/méthacrylate d'hydroxyéthyle ; les polydiméthylsiloxanes à terminaison monoalkyle ; un macromère comprenant le produit de la réaction du méthacrylate de 2-hydroxyéthyle, du méthacrylate de méthyle, du méthacryloxy-propyl-tris(triméthylsiloxy)silane, du polydiméthylsiloxane à terminaison monométhacryloxypropyle et à terminaison monobutyle et de l'isocyanate de 3-isopropényl-$\alpha$,$\alpha$-diméthylbenzyle ; le méthacryloxypropyl-tris(triméthylsiloxy)silane, le N,N-diméthylacrylamide et le diméthacrylate de triéthylèneglycol.

2. Procédé selon la revendication 1, dans lequel ledit hydrogel de silicone est fabriqué à partir d'un siloxane ; d'un silane ; d'un amide ou d'un additif monomère ou d'un mélange de ceux-ci.

3. Procédé selon la revendication 2, dans lequel ledit hydrogel de silicone est fabriqué à partir d'un polydiméthylsiloxane, d'un méthacryloxypropyl-tris(triméthylsiloxy)silane, d'un diméthylamide et d'un dérivé acrylate et d'un dérivé méthacrylate.

4. Procédé selon la revendication 3, dans lequel ledit polydiméthylsiloxane comprend le monométhacryloxypolydiméthylsiloxane.

5. Procédé selon l'une quelconque des revendications 1 à 4, dans lequel ledit hydrogel comprend un macromère formé en combinant du méthacrylate de 2-hydroxyéthyle, du méthacrylate de méthyle, du méthacryloxypropyl-tris(triméthylsiloxy)silane, du polydiméthylsiloxane à terminaison monométhacryloxypropyle et à terminaison monobutyle et de l'isocyanate de 3-isopropényl-$\alpha$,$\alpha$-diméthylbenzyle.

6. Procédé selon l'une quelconque des revendications 1 à 5, comprenant les étapes consistant à :

   a) formuler un mélange de monomères comprenant du polydiméthylsiloxane ; un macromère formé en combinant des monomères hydrophobes et des monomères hydrophiles ; des silanes ; des amides ; des dérivés méthacrylate ; et des photoamorceurs ;

b) normaliser les vitesse de réaction des composants du mélange de monomères ; et
c) durcir ledit mélange de monomères avec un rayonnement UV ou visible.

**7.** Procédé selon la revendication 6, dans lequel l'étape consistant à normaliser les vitesses de réaction comprend l'étape consistant à chauffer à une température de 55°C à 75°C.

**8.** Procédé selon la revendication 6 ou 7, dans lequel le mélange de monomères comprend en outre du monométhacryloxypolydiméthylsiloxane ; un macromère formé en combinant du méthacrylate de 2-hydroxyéthyle, du méthacrylate de méthyle, du méthacryloxypropyl-tris-(triméthylsiloxy)silane, du polydiméthylsiloxane à terminaison monométhacryloxypropyle et à terminaison monobutyle et de l'isocyanate de 3-isopropényl-α,α-diméthylbenzyle ; du méthacryloxypropyl-tris(triméthylsiloxy)silane ; du diméthacrylate de triéthylèneglycol ; de l'acide hydroxyéthylméthacrylique; et des photoamorceurs.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5936052 A
- US 4136250 A
- US 4153641 A
- US 4740533 A
- US 5034461 A
- US 5070215 A
- US 5260000 A
- US 5310779 A
- US 5358995 A
- US 4910277 A
- US 4330383 A
- DE 19630100 A